# EUROPEAN PATENT SPECIFICATION

(11) **EP 2 339 533 B1**
(45) Date of publication and mention of the grant of the patent: **18.07.2012**
(21) Application number: 10189560.5
(22) Date of filing: 01.11.2010
(51) Int. Cl.: G06T 5/50, G06T 5/00

(54) **Saliency based video contrast enhancement method**
Auf hervorstechenden Merkmalen basiertes Videokontrastverbesserungsverfahren
Procédé d'amélioration du contraste vidéo en fonction de la saillance

(30) Priority: 20.11.2009 TR 200908819
(43) Date of publication of application: 29.06.2011
(73) Proprietor: Vestel Elektronik Sanayi ve Ticaret A.S., 45030 Manisa (TR)
(72) Inventor: Cigla, Cevahir, Ankara (TR)
(74) Representative: Cayli, Hülya

(56) References cited:
- EP-A1- 1 744 279
- JI T-L ET AL: "ADAPTIVE IMAGE CONTRAST ENHANCEMENT BASED ON HUMAN VISUAL PROPERTIES", IEEE TRANSACTIONS ON MEDICAL IMAGING, IEEE SERVICE CENTER, PISCATAWAY, NJ, US, vol. 13, no. 4, 1 December 1994 (1994-12-01), pages 573-586, XP000491674, ISSN: 0278-0062, DOI: DOI:10.1109/42.363111
- RADHAKRISHNA ACHANTA ET AL: "Salient Region Detection and Segmentation", 12 May 2008 (2008-05-12), COMPUTER VISION SYSTEMS; [LECTURE NOTES IN COMPUTER SCIENCE], SPRINGER BERLIN HEIDELBERG, BERLIN, HEIDELBERG, PAGE(S) 66 - 75, XP019088821, ISBN: 978-3-540-79546-9 * the whole document *

## Description

### Technical field

The present invention relates to a method for contrast enhancement based on saliency map which corresponds to visually attractive regions.

### Prior art

The global contrast enhancement methods may decrease the contrast in local domain; hence result in loss of details. In order to overcome this disadvantage, local contrast enhancement is inevitable.

Published US patent application US 7003153 discloses a method and apparatus for video contrast enhancement. In this method, a pixel level threshold is set for an input video frame in a video sequence. For pixel levels in the input video frame that are below the threshold, an adaptive contrast-enhancing function is applied. For other pixel levels, a scene-stable mapping function is applied.

However, local contrast algorithms mostly detect local characteristics within a small window around pixels and perform enhancement based on those measures. In that manner, they are lack of capturing the characteristics in terms of visual attention. Thus, utilization of saliency concept which is totally related with human attention model seems to be a good alternative for local contrast enhancement.

*"*Saliency guided enhancement for volume visualization" IEEE Transactions on Visualization and computer graphics vol 12, No 5, 2006; is based on increasing the intensity in a volume for the visually attractive regions. Thus, it provides attractive regions to be more attractive and observed in more detail. However, this method is application dependent and totally aims to provide more informative images to doctors for easier interpretation. In that manner, this method is not applicable to consumer electronics in which variety of images and frames are observed by a variety of users.

Document JI T-L ET AL: "ADAPTIVE IMAGE CONTRAST ENHANCEMENT BASED ON HUMAN VISUAL PROPERTI ES", IEEE TRANSACTIONS ON MEDICAL IMAGING. IEEE SERVICE CENTER. PISCATAWAY. NJ. US. vol. 13. no. 4.1 December 1994 (1994-12-01). Pages 573-586. XP000491674. ISSN: 0278-0062. DOI:10.1109/42.363111 discloses an adaptive image contrast enhancement method based on human visual properties. In this method, image contrast is enhanced according to image contrast and just noticeable difference of the observer.

### Objective of the invention

The aim of the proposed method is to perform local contrast enhancement by giving special attention to visually salient regions.

Another aim of the proposed method is to increase the local contrast of the image which cannot be achieved through histogram equalization, by considering the centre-surround differences of the pixels in local domain.

### Brief Disclosure of the Invention

The main advantage of the invention is the utilization of saliency maps for the automatic local contrast enhancement which is related with human visual attention. Local contrast is increased according to the visually attractiveness of the regions in an image.

The core idea of the method is first detecting the visually attractive (i.e. salient) regions in the frame, based on centre-surround differences and Weber's law of minimum noticeable differences. The second step involves the histogram equalization of the corresponding frame. In that step, different type of methods can be utilized. Next, the most important step involves the fusion of saliency map into the contrast refinement in local domain. Based on the measures which indicate the intensity difference of any pixel with the local mean, the stretching of the intensity values is performed by modifying the mapping achieved in histogram mapping. In that step, the intensity values of the pixels which are darker than their surroundings are further decreased while for the brighter pixels those values are increased in order to increase local contrast.

### Brief description of the drawings

Figure-1 shows the flowchart of the proposed saliency dependent contrast enhancement method.
Figure-2 shows the weighting function of the intensity difference level with respect to the background, based on the Weber's law of minimum noticeable difference.
Figure-3 shows the calculation of the mean within an arbitrary window around a pixel.
Figure-4 shows the flowchart of local contrast refinement block of the proposed method for fusion of saliency map; intensity, image and histogram mapping function.
Figure-5 shows the shifting among the intensity mapping function obtained via any histogram equalization method.
Figure-6 shows decomposition of saliency histogram into equal sized regions, resulting in different shift levels obtained through shift-level detector.

### Detailed disclosure of the invention

Researches on extracting visually attractive regions in images indicate that pixels which are distinct than their surroundings in terms of color, intensity, orientation and motion field are more salient compared to the other pixels. The saliency concept which was introduced by Itti and Koch in 1998 and many application areas such as coding, watermarking, segmentation, realistic rendering have come out. The main idea among different saliency map extraction algorithms is that under different scales, salient regions obey large variations than the surround. Most of the realizable real-time methods in literature utilize "the feature integration theory" to extract saliency maps. Feature maps for color, intensity and orientation are extracted independently by using Gaussian pyramids or mean values among large low-pass filters, and these maps are combined in various ways.

Image enhancement based on saliency has been most considered by researchers from computer graphics or biomedical engineering. In computer graphics, the computational complexity is tried to be decreased by processing salient regions with special attention and giving less effort to the regions with less saliency; while in biomedical, it is aimed to increase the user attention for the desired regions in volume visualization of human body, such as head models. Apart from these methods, saliency based image enhancement is lacking in video processing area. Thus, with the increase in tendency for saliency based processing, it is inevitable to utilize saliency in video enhancement which is a step for user dependent TV applications as well as a new path for visual processing. It is a critical issue to utilize saliency in TV applications, since visual attention depends on different features such as face, motion, texture, size; and it is not possible to extract the exact saliency map although many algorithms have been proposed. Thus, the enhancement method should not be affected from the errors in the extracted saliency map.

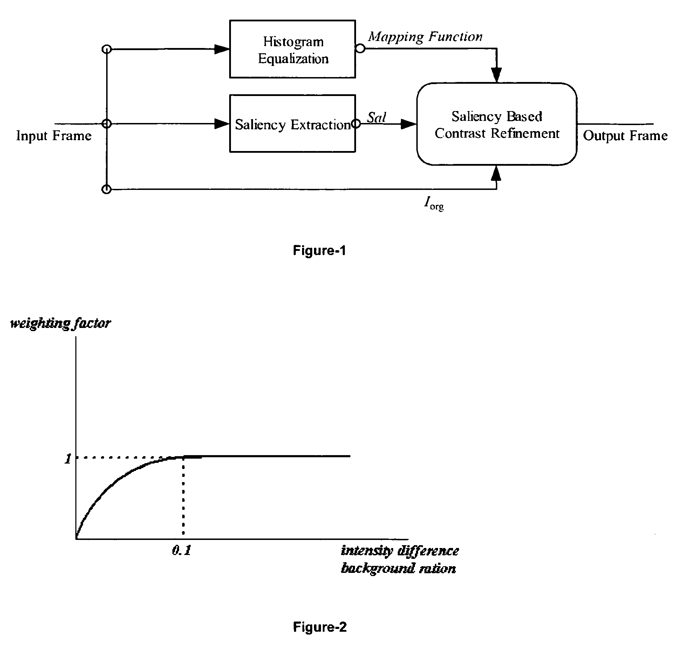

Considering contrast enhancement, multi-histogram equalization is a common way for detecting different type of regions and applying histogram stretching to those regions independently. In those methods, saliency can be utilized to segment the regions and perform high contrast enhancement for the visually attractive regions. However, the experiments on saliency extraction indicate that the extraction methods mostly detect pixels which are different from surrounds, i.e., high center-surround differences, which lead errors in segmentation of large objects. In that manner, the segmentation may divide an object into distinct parts with resulting a wrong mapping in histogram equalization. Saliency is extracted from local deviations of pixels from the surround, thus it should be utilized as a local contrast enhancement (LCE) operator. In the light of these assumptions the outline of the proposed method is given in figure 1.

In the contrast enhancement block in figure 1, any global histogram equalization method can be utilized. In this work, the aim is to further refine any global contrast enhancement algorithm in local domain. In that manner, the proposed algorithm is independent of the histogram equalization part, thus any suitable algorithm can be utilized in the corresponding block. In the saliency extraction block, the saliency map of the frame is extracted which gives an information about the visually attractiveness of the pixels as well as the relation of the pixels according to their surroundings, such as darker or brighter. In addition, the resolution of the map should be same as the frame resolution. In this work, a saliency extraction method is also proposed which is a modified and improved version of the algorithm introduced in *"Salient region detection and segmentation"* from Radhakrishna Achanta Et Al.

In most saliency extraction methods, Lab color space is widely utilized due to its uniformity in perceptual domain. In this work, since the fundamental aim is to perform contrast enhancement based on the local properties of the pixels with respect to intensity, the saliency extraction is achieved in *RGB* or *YUV* color space. In that manner, for each pixel, differences with the mean value within certain window sizes are calculated for three channels *(Y channel for YUV case)* independently. At that point, five different window sizes are utilized in order to determine the center-surround differences and in which scale the pixel is different from the surround. The window sizes are chosen, according to equation 1. As can be seen in equation 1, the window sizes are considerably large; the reason behind this choice is that small window sizes does not give enough information about the surround and provides edge detection instead of attraction detection which result in more noisy feature maps. $\frac{frame width}{32} \leq window width \leq \frac{frame width}{2}$

During the calculation of the center-surround differences, Weber's law of *Just Noticeable Difference* is also utilized. The idea behind this fact is that the intensity difference should be at least 10% of the background intensity to be noticeable. Thus a weighting function is utilized to determine the actual visual attraction of the corresponding difference related to the background intensity, which is given in figure 2. In the weighting function, if the difference and background ration is below 10%, the factor is decreased. The saliency of a pixel for a given window size is calculated as in equation 2 and 3; where *f* denotes the weighting function illustrated in figure 2 and *k* corresponds to the index of the utilized window size, w corresponds to the width and h to the height of the window. ${C}_{k} \left(x, y\right) = {I}_{RGB} \left(x, y\right) - \frac{1}{w * h} {\sum }_{i = - w / 2}^{w / 2} {\sum }_{j = - h / 2}^{h / 2} {I}_{RGB} ⁢ \left(x+i,y+j\right)$ ${C}_{k} \left(x, y\right) = {C}_{k} \left(x, y\right) . f \left({C}_{k}\left(x, y\right)\right)$

The function given in figure 2 may have different type of analytic definitions, throughout this invention the utilized closed form of the function is given in equation 4. $f \left(x\right) = { \begin{matrix}10 ⁢ \sqrt{0.2 ⁢ x - {x}^{2}} & if x < 0.1 \\ 1 & elsewhere\end{matrix}$

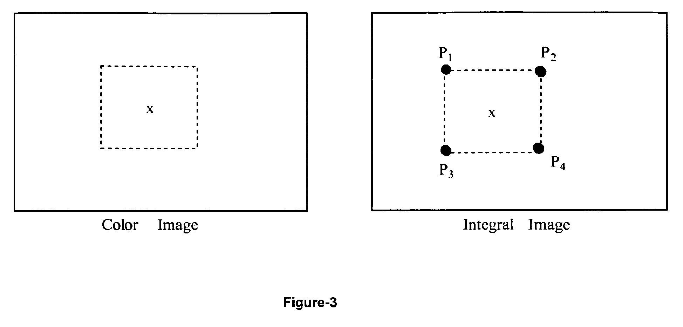

Large window sizes are utilized during the estimation of the saliency map, thus calculating the mean values within the window for each pixel independently requires huge processing. However, utilizing integral image drastically decreases the computation complexity. An integral image is defined by equation 5, and the mean value within an arbitrary window size can be found by (P₄+P₁-P₂-P₃) as illustrated in figure 3. Thus the operation complexity is independent of the window size since for each window size only four operations are required. $Integral \left(x, y\right) = {\sum }_{i = 1}^{x} {\sum }_{j = 1}^{y} {I}_{RGB} \left(i, j\right)$

After centre-surround differences are calculated for each pixel through the pre-determined five different window sizes, the final saliency map is obtained by directly summing those values, as in equation 6. In that way, the measure of how the pixels are different from their surroundings is obtained; in addition the darkness or brightness is also considered such that, for darker pixels saliency values are negative and for the brighter pixels saliency is positive. This is an important fact and will be crucial in the refinement stage. Finally the salient values are mapped to a range of between (-255, 255) by scaling the minimum and maximum values for convenience. $SaliencyMap \left(x, y\right) = {\sum }_{i = 1}^{5} {C}_{i} \left(x, y\right)$

The histogram equalization block provides a global contrast enhancement by stretching the histogram. Any histogram equalization algorithm present in literature can be utilized in this block.

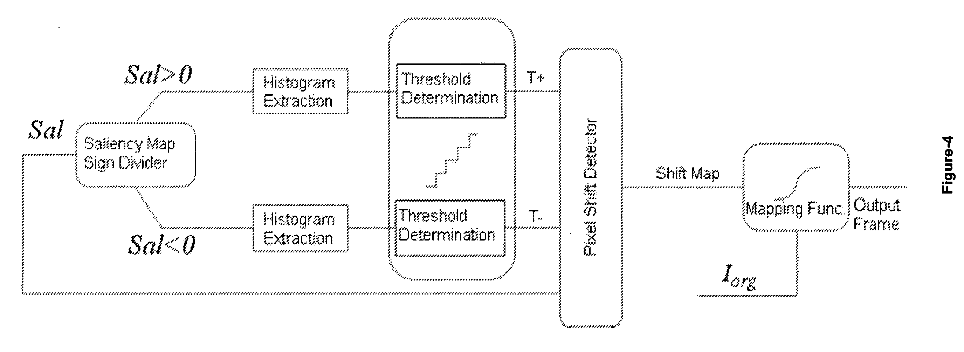

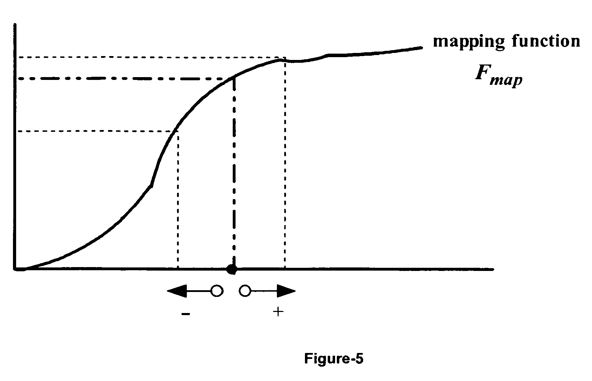

The utilization of saliency maps in contrast enhancement is performed in the final block. The flowchart of this block is given in figure 4. The main idea of this step is that, given the histogram mapping function calculated in histogram equalization block, the mapping values are shifted according to the saliency levels of the pixels. During this shift, the sign of the saliency becomes important and determines the direction of the shift in the mapping function. In other words, for a salient pixel which is darker than the surrounding, the mapping value of a pixel darker than the corresponding pixel is assigned during the histogram equalization; and vice-versa for the brighter pixel. As illustrated in figure 5, the enhancement is performed by shifting among the mapping function in positive or negative direction according to the saliency measures; in that way based on local properties the pixel is mapped to a darker or brighter value than the actual mapping value. At that point, the shift amounts are also important and should provide differentiation between salient and non-salient regions. Thus, saliency map which is decomposed into positive and negative parts is divided into groups so that different enhancement levels are obtained according to the saliency power of the pixels.

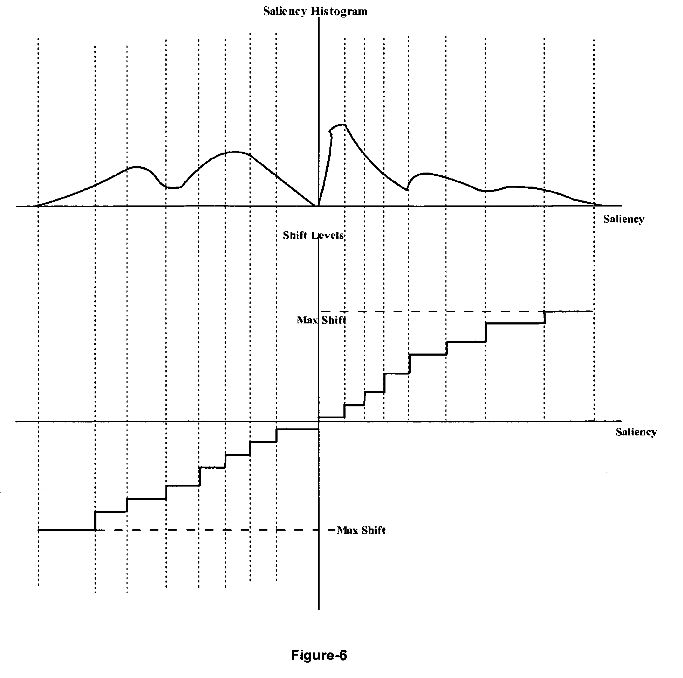

As illustrated in figure 4, the first step involves the decomposition of the saliency map into two sub-maps according to the sign of the saliency values. Then each sub-map is divided into *N* levels which involve same number of pixels. In order to achieve the division of groups into same number, histogram of the saliency map is extracted and division is achieved through cumulative distribution function of the corresponding histogram, shown in figure 6. The thresholds define different levels of saliency which determine the shift in the mapping function, shown in figure 6. The shift values increase as the saliency increases, which provide more enhancements on salient pixels than the non-salient pixels. Hence, the modified mapping function in equation 7 is utilized to map pixels into new intensity levels, where *Fₘₐₚ* corresponds to the original mapping function determined via histogram equalization and *T* corresponds to the shifting function illustrated in figure 6. Based on the saliency measure, it can be observed that pixels which are darker than their surroundings are shifted to darker mappings and vice-versa for the brighter pixels. This effect creates contrast increase in local domain. Throughout this invention, the shift levels are chosen to be between [0, 16] in general. ${I}_{enhanced} \left(x, y\right) = {F}_{amp} ⁢ \left(I\left(x, y\right)+T\left(Saliency\left(x, y\right)\right)\right)$

### Embodiment(s) of the invention

Hereinafter, an embodiment of the proposed invention is described step by step.
**Step 1:** Calculate the integral image of the frame by summing the pixel values among the rectangular window bounded by the corresponding pixel location and the starting point, as given by the equation below. $Integral \left(x, y\right) = {\sum }_{i = 1}^{x} {\sum }_{j = 1}^{y} {I}_{RGB} \left(i, j\right)$
**Step 2:** Calculate the mean intensity values for all pixels within five different window sizes which are in the range of [(frame width)/32,(frame width)/2].
**Step 3:** Calculate the differences of the intensity values and five different mean values corresponding to different window sizes for each pixel; then sum up all the values for each pixel, independently by weighting those differences according to weber's law of *"just noticeable difference"* via a function given in equation 4. Finally, scale the saliency map to a range of (-255,255). $SaliencyMap \left(x, y\right) = {\sum }_{i = 1}^{5} {C}_{i} \left(x, y\right)$
**Step 4:** Perform global contrast enhancement via any histogram equalization algorithm and obtain a mapping function for each intensity value.
**Step 5:** Based on the saliency map obtained in step 3, decompose the negative and positive parts. In addition, extract the histogram of each sub-map independently.
**Step 6:** Divide both sub-graphs into *N* regions by using the cumulative distribution function so that within each region same number of pixel exits (*N can be chosen* as 8-16).
**Step 7:** According to the division of the sub-maps define a staircase shifting function such that as the absolute value of saliency increases the shift value also increases. At that point, set the boundaries of the function to [0, 16].
**Step 8:** For each pixel, based on the saliency value determine the shift level by utilizing the function defined in step 7. If saliency value is negative, move in negative direction and move in positive direction if the saliency is positive.
**Step 9:** Depending on the shift levels, map each pixel to the new intensity values by shifting among the mapping function determined in step 4, as given in the equation below. Thus, the local characteristics provide the pixels to be mapped to a brighter or darker intensity level which results in an increase in the local contrast. ${I}_{enhanced} \left(x, y\right) = {F}_{amp} ⁢ \left(I\left(x, y\right)+T\left(Saliency\left(x, y\right)\right)\right)$

## Claims

1. A method for automatic local contrast enhancement in an input image, utilizing saliency maps as a local contrast enhancement LCE operator, for adjusting the local contrast according to the visual attractiveness of the regions in an image; the method comprising the steps of:
- histogram equalization; wherein a mapping function is obtained;
- saliency extraction; wherein the saliency map of the input image is extracted which gives an information about the visual attractiveness of the pixels as well as the relation of the pixels according to their surroundings;
- saliency based contrast refinement; wherein the utilization of the saliency map in contrast enhancement is performed;
**characterized in that** said step of saliency based contrast refinement comprises the steps of:
- decomposition of the saliency map into two sub-maps according to the sign of the saliency values,
- extraction of a histogram of each of the two sub-maps,
- threshold determination, by dividing, based on the extracted histograms, each sub-map into 'N' levels which involve the same number of pixels in order to obtain different enhancement levels of the pixels according to the saliency power of the pixels,
- mapping each pixel of the input image to a new intensity value using the mapping function, wherein the mapping values of said mapping function are shifted for each pixel in a positive or negative direction according to said enhancement levels of the pixels.

2. A method according to claim 1 **characterised in that**, in the saliency extraction step, the saliency extraction is achieved in RGB or YUV color space; **in that** manner for each pixel, differences with the mean value within certain window sizes are calculated for three channels independently.

3. A method according to claim 1 **characterized in that**; mean intensity values for all pixels are calculated within five different window sizes.

4. A method according to claim 3 **characterized in that**, the window sizes are within the range of: $\frac{frame width}{32} \leq window width \leq \frac{frame width}{2}$

5. A method according to claim 3 **characterized in that**, in order to calculate the center-surround differences of a frame, Weber's law of Just Noticeable Difference is utilized, accordingly the intensity difference is considered to be noticeable if it is at least 10% of the background intensity.

6. A method according to claim 5 **characterized in that**, a weighting function is utilized to determine the actual visual attraction of the corresponding difference related to the background intensity in this weighting function.

7. A method according to claim 1 **characterized in that**, in order to decrease the computation complexity, an integral image of the input frame is utilized.

8. A method according to claim 5 or 6 **characterized in that**, after centre-surround differences are calculated for each pixel through the pre-determined five different window sizes, the final saliency map is obtained by directly summing those values, **in that** way; the darkness or brightness is considered such that, for darker pixels saliency values are negative and for the brighter pixels saliency is positive.

9. A method according to claim 8, wherein the saliency values are mapped to a range of between [-255, 255] by scaling the minimum and maximum values for convenience.

10. A method according to claim 1 **characterized in that**, in order to achieve the division of groups into same number, histogram of the saliency map is extracted and division is achieved through cumulative distribution function of the corresponding histogram.

11. A method for automatic local contrast enhancement in an input image, utilizing saliency maps as a local contrast enhancement LCE operator, for increasing the local contrast according to the visual attractiveness of the regions in an image, the method comprising the following steps:
- calculating an integral image of the input image by summing the pixel values among the rectangular window bounded by a corresponding pixel location and a starting point;
- calculating the mean intensity values for all pixels within five different window sizes which are in the range of [(frame width)/32,(frame width)/2],
- calculating the differences of the intensity values of the input image and five different mean values corresponding to different window sizes for each pixel;
- summing up all the values of said differences for each pixel, independently by weighting those differences according to Weber's law of *Just Noticeable* Difference via a function to obtain a saliency map;
- scaling the saliency map to a range of [-255,255];
- performing a histogram equalization algorithm on the input image to obtain a mapping function for each intensity value;
- based on the saliency map obtained, decomposing the saliency map into the negative and positive sub-maps, and extracting a histogram of each sub-map independently;
- dividing both sub-maps into 'N' regions by using said extracted histograms,
- according to the division of the sub-maps, defining a staircase shifting function such that when the absolute value of saliency increases, the shift value also increases;
- for each pixel, based on the saliency value, determining the shift level by utilizing the staircase shifting function such that:
o if the saliency value is negative, the shift level has a negative direction,
o if the saliency value is positive, the shift level has a positive direction;
- mapping each pixel to a new intensity value using the mapping function, wherein the mapping values of said mapping function are shifted depending on the shift levels.

12. A method according to claim 11 **characterized in that**, N is chosen between 8 and 16.

13. A method according to claim 11 **characterized in that**, the boundaries of the staircase shifting function is set to [0, 16].

## Patentansprüche

1. Verfahren zur automatischen lokalen Kontrastverbesserung in einem Eingangsbild, wobei Salienzkarten als lokaler Kontrastverbesserungsoperator LCE genutzt werden, zur Einstellung des lokalen Kontrastes entsprechend der visuellen Attraktivität der Regionen in einem Bild, wobei das Verfahren die folgenden Schritte umfasst:
Histogrammangleichung, wobei eine Abbildungsfunktion erhalten wird,
- Salienzextraktion, wobei die Salienzkarte des Eingangsbildes extrahiert wird, was eine Information über die visuelle Attraktivität der Pixel und der Relation der Pixel zu ihren Umgebungen liefert, salienzbasierte Kontrastverbesserung, wobei die Verwendung der
- Salienzkarte bei der Kontrastverbesserung durchgeführt wird, **dadurch gekennzeichnet, dass** der Schritt der salienzbasierten Kontrastverbesserung die folgenden Schritte umfasst:
- Zerlegen der Salienzkarte in zwei Unterkarten entsprechend den Vorzeichen der Salienzwerte,
- Extraktion eines Histogramms zu jeder der beiden Untermappen,
- Schwellenwertbestimmung durch Unterteilen basierend auf den extrahierten Histogrammen jeder Untermappe in N-Stufen, beinhaltend die gleiche Anzahl von Pixeln, um unterschiedliche Verbesserungsstufen der Pixel entsprechend ihrer Salienzkraft zu erhalten,
- Abbilden jedes Pixels des Eingangsbildes mit einem neuen Intensitätswert unter Verwendung der Abbildungsfunktion, wobei die Abbildungswerte der Abbildungsfunktion für jedes Pixel entsprechend den Verbesserungsstufen der Pixel in eine positive oder eine negative Richtung verschoben werden.

2. Verfahren nach Anspruch 1, **dadurch gekennzeichnet, dass** in dem Schritt der Salienzextraktion die Salienzextraktion im RGB- oder YUV-Farbraum erzielt wird, wobei auf diese Weise für jedes Pixel Unterschiede gegenüber dem Mittelwert innerhalb bestimmter Fenstergrößen unabhängig für drei Kanäle berechnet werden.

3. Verfahren nach Anspruch 1, **dadurch gekennzeichnet, dass** Intensitätsmittelwerte für alle Pixel innerhalb fünf unterschiedlicher Fenstergrößen berechnet werden.

4. Verfahren nach Anspruch 3, **dadurch gekennzeichnet, dass** die Fenstergrößen in dem folgenden Bereich liegen: $\left(R⁢a⁢h⁢m⁢e⁢n⁢b⁢r⁢e⁢i⁢t⁢e/32\right) < F ⁢ e ⁢ n ⁢ s ⁢ t ⁢ e ⁢ r ⁢ b ⁢ r ⁢ e ⁢ i ⁢ t ⁢ e < \left(R⁢a⁢h⁢m⁢e⁢n⁢b⁢r⁢e⁢i⁢t⁢e/2\right)$

5. Verfahren nach Anspruch 3, **dadurch gekennzeichnet, dass** zur Berechnung der Center-Surround-Unterschiede eines Rahmens das Gesetz von Weber zu gerade erkennbaren Unterschieden verwendet wird, demgemäß der Intensitätsunterschied als erkennbar betrachtet wird, wenn er wenigstens 10% der Hintergrundintensität beträgt.

6. Verfahren nach Anspruch 5, **dadurch gekennzeichnet, dass** eine Gewichtungsfunktion f verwendet wird, um die aktuelle visuelle Anziehung des entsprechenden Unterschieds bezogen auf die Hintergrundintensität bei dieser Gewichtungsfunktion zu bestimmen.

7. Verfahren nach Anspruch 1, **dadurch gekennzeichnet, dass** zur Verringerung der Berechnungskomplexität ein Integralbild des Eingangsrahmens verwendet wird

8. Verfahren nach Anspruch 5 oder 6, **dadurch gekennzeichnet, dass** nachdem die Center-Surround-Unterschiede für jedes Pixel durch die vorbestimmten fünf unterschiedlichen Fenstergrößen berechnet sind, die finale Salienzkarte erhalten wird durch direktes Summieren dieser Werte, wobei die Dunkelheit oder Helligkeit derart beachtet wird, dass für dunklere Pixel Salienzwerte negativ und für hellere Pixel die Salienz positiv ist

9. Verfahren nach Anspruch 8, wobei die Salienzwerte der Einfachheit halber in einen Bereich zwischen [-255, 255] durch Skalieren der Maximal- und Minimalwerte dargestellt werden.

10. Verfahren nach Anspruch 1. **dadurch gekennzeichnet, dass**, um die Unterteilung der Gruppen in gleiche Anzahl zu erreichen, ein Histogramm der Salienzkarte extrahiert wird und die Unterteilung durch eine kumulative Teilungsfunktion des entsprechenden Histogramms erzielt wird

11. Verfahren zur automatischen lokalen Kontrastverbesserung eines Eingangsbildes unter Verwendung von Salienzkarten als lokaler Kontrastverbesserungsoperator LCE, zur Verbesserung des lokalen Kontrastes entsprechend der visuellen Attraktivität der Regionen einer Abbildung, wobei das Verfahren die folgenden Schritte umfasst:
- Berechnen einer Integralabbildung eines Eingangsbildes durch Summieren der Pixelwerte inmitten des rechteckigen Fensters begrenzt durch einen entsprechenden Pixelort und einen Startpunkt;
- Berechnen der Intensitätsmittelwerte für sämtliche Pixel innerhalb fünf unterschiedlicher Fenstergrößen, die innerhalb des Bereiches von [(Rahmenbreite)/32, (Rahmenbreite)/2] liegen;
- Berechnen der Unterschiede der Intensitätswerte des Eingangsbildes und der fünf unterschiedlichen Mittelwerte entsprechend den unterschiedlichen Fenstergrößen für jedes Pixel;
- Aufsummieren sämtlicher Werte dieser Unterschiede unabhängig für jedes Pixel durch Gewichten dieser Unterschiede entsprechend dem Gesetz von Weber zu gerade erkennbaren Unterschieden über eine Funktion, um eine Salienzkarte zu erhalten;
- Skalieren der Salienzkarte auf einen Bereich von [-255, 255],
- Ausführen eines Histogramm-Angleichungsalgorithmus auf das Eingangsbild;
- um für jeden Intensitätswert eine Abbildungsfunktion zu erhalten, basierend auf der erhaltenen Salienzkarte ein Zerlegen der Salienzkarte in eine negative und eine positive Unterkarte und Extrahieren eines Histogramms unabhängig für jede Unterkarte:
- Unterteilen beider Unterkarten in N Bereiche durch Verwendung der extrahierten Histogramme;
- gemäß der Unterteilung der Unterkarten ein Definieren einer Treppenverschiebungsfunktion, so dass, wenn der Absolutwert der Salienz steigt, der Verschiebungswert ebenfalls steigt, Bestimmen des
- Verschiebungswertes für jedes Pixel basierend auf dem Salienzwert durch Verwendung der Treppenverschiebungsfunktion, so dass
- falls der Salienzwert negativ ist, der Verschiebungswert eine negative Richtung besitzt,
- falls der Salienzwert positiv ist, der Verschiebungswert eine positive Richtung besitzt,
- Abbilden jedes Pixels mit einem neuen Intensitätswert unter Verwendung der Abbildungsfunktion, wobei die Abbildungswerte der Abbildungsfunktion abhängig von den Verschiebungswerten verschoben sind.

12. Verfahren nach Anspruch 11, **dadurch gekennzeichnet, dass** IM ausgewählt ist zwischen 8 und 16.

13. Verfahren nach Anspruch 11, **dadurch gekennzeichnet, dass** die Grenzen der Treppenverschiebungsfunktion eingestellt sind auf [0,16].

## Revendications

1. Procédé pour l'amélioration de contraste local automatique dans une image d'entrée, utilisant des cartes de saillance comme un opérateur d'amélioration de contraste local LCE, pour ajuster le contraste local selon l'attractivité visuelle des régions dans une image ; le procédé comprenant les étapes :
- d'égalisation d'histogramme ; où une fonction de mappage est obtenue ;
- d'extraction de saillance ; où la carte de saillance de l'image d'entrée est extraite qui donne une information concernant l'attractivité visuelle des pixels ainsi que la relation des pixels selon leurs alentours ;
- d'affinement de contraste basé sur la saillance ; où l'utilisation de la carte de saillance dans l'amélioration de contraste est effectuée ;
**caractérisé en ce que** ladite étape d'affinement de contraste basé sur la saillance comprend les étapes :
- de décomposition de la carte de saillance en deux sous-cartes selon le signe des valeurs de saillance,
- d'extraction d'un histogramme de chacune des deux sous-cartes,
- de détermination de seuil, en divisant, sur la base des histogrammes extraits, chaque sous-carte en N niveaux qui impliquent le même nombre de pixels afin d'obtenir différents niveaux d'amélioration des pixels selon la puissance de saillance des pixels,
- de mappage de chaque pixel de l'image d'entrée avec une nouvelle valeur d'intensité utilisant la fonction de mappage, où les valeurs de mappage de ladite fonction de mappage sont décalées pour chaque pixel dans une direction positive ou négative selon lesdits niveaux d'amélioration des pixels.

2. Procédé selon la revendication 1, **caractérisé en ce que**, à l'étape d'extraction de saillance, l'extraction de saillance est réalisée dans un espace de couleur RGB ou YUV ; de cette manière pour chaque pixel, des différences avec la valeur moyenne à l'intérieur de certaines tailles de fenêtre sont calculées pour trois canaux indépendamment.

3. Procédé selon la revendication 1, **caractérisé en ce que** des valeurs d'intensité moyennes pour tous les pixels sont calculées à l'intérieur de cinq tailles de fenêtre différentes.

4. Procédé selon la revendication 3, **caractérisé en ce que** les tailles de fenêtre sont à l'intérieur de la plage de : $\frac{largeur de trame}{32} \leq largeur de fenêtre \leq \frac{largeur de trame}{2}$

5. Procédé selon la revendication 3, **caractérisé en ce que**, afin de calculer les différences centre-bordure d'une trame, la loi de Weber de Différence juste perceptible est utilisée, en conséquence la différence d'intensité est considérée être perceptible si c'est au moins 10% de l'intensité d'arrière-plan.

6. Procédé selon la revendication 5, **caractérisé en ce qu'**une fonction de pondération f est utilisée pour déterminer l'attraction visuelle réelle de la différence correspondante liée à l'intensité d'arrière-plan dans cette fonction de pondération.

7. Procédé selon la revendication 1, **caractérisé en ce que**, afin de diminuer la complexité de calcul, une image intégrale de la trame d'entrée est utilisée

8. Procédé selon la revendication 5 ou 6, **caractérisé en ce que**, après que les différences centre-bordure sont calculées pour chaque pixel par l'intermédiaire des cinq tailles de fenêtre différentes prédéterminées, la carte de saillance finale est obtenue par la somme directe de ces valeurs, de cette façon ; l'obscurité ou la luminosité est considérée de sorte que, pour des pixels plus sombres, des valeurs de saillance soient négatives et pour les pixels plus clairs la saillance soit positive.

9. Procédé selon la revendication 8, dans lequel les valeurs de saillance sont mappées dans une plage comprise entre [-255, 255] en mettant à l'échelle les valeurs minimales et maximales pour la commodité.

10. Procédé selon la revendication 1, **caractérisé en ce que**, afin de réaliser la division de groupes en même nombre, l'histogramme de la carte de saillance est extrait et la division est réalisée par l'intermédiaire d'une fonction de distribution cumulative de l'histogramme correspondant.

11. Procédé pour l'amélioration de contraste local automatique dans une image d'entrée, utilisant des cartes de saillance comme un opérateur d'amélioration de contraste local LCE, pour augmenter le contraste local selon l'attractivité visuelle des régions dans une image, le procédé comprenant les étapes suivantes :
- le calcul d'une image intégrale de l'image d'entrée en faisant la somme des valeurs de pixel parmi la fenêtre rectangulaire limitée par un emplacement de pixel correspondant et un point de départ ;
- le calcul des valeurs d'intensité moyennes pour tous les pixels à l'intérieur de cinq tailles de fenêtre différentes qui sont dans la plage de [(largeur de trame)/32, (largeur de trame)/2] ;
- le calcul des différences des valeurs d'intensité de l'image d'entrée et de cinq valeurs moyennes différentes correspondant à des tailles de fenêtre différentes pour chaque pixel ;
- la somme de toutes les valeurs desdites différences pour chaque pixel, indépendamment en pondérant ces différences selon la loi de Weber de Différence juste perceptible via une fonction pour obtenir une carte de saillance ;
- la mise à l'échelle de la carte de saillance dans une plage de [-255, 255] ;
- l'exécution d'un algorithme d'égalisation d'histogramme sur l'image d'entrée afin d'obtenir une fonction de mappage pour chaque valeur d'intensité ;
- sur la base de la carte de saillance obtenue, la décomposition de la carte de saillance en les sous-cartes négative et positive, et l'extraction d'un histogramme de chaque sous-carte indépendamment ;
- la division des deux sous-cartes en N régions en utilisant lesdits histogrammes extraits,
- selon la division des sous-cartes, la définition d'une fonction de décalage en escalier de sorte que lorsque la valeur absolue de saillance augmente, la valeur de décalage augmente également ;
- pour chaque pixel, sur la base de la valeur de saillance, la détermination du niveau de décalage en utilisant la fonction de décalage en escalier de sorte que:
-- si la valeur de saillance est négative, le niveau de décalage ait une direction négative ;
-- si la valeur de saillance est positive, le niveau de décalage ait une direction positive ;
- le mappage de chaque pixel avec une nouvelle valeur d'intensité utilisant la fonction de mappage, où les valeurs de mappage de ladite fonction de mappage sont décalées en fonction des niveaux de décalage.

12. Procédé selon la revendication 11, **caractérisé en ce que** N est choisi entre 8 et 16.

13. Procédé selon la revendication 11, **caractérisé en ce que** les limites de la fonction de décalage en escalier sont établies à [0, 16].
